# EUROPEAN PATENT SPECIFICATION

(11) **EP 2 724 922 B1**
(45) Date of publication and mention of the grant of the patent: **18.10.2017**
(21) Application number: 13184473.0
(22) Date of filing: 16.09.2013
(51) Int. Cl.: B62J 25/00

(54) **Footrest release device for motorcycles**
Fußstützenfreigabevorrichtung für Motorräder
Dispositif de libération de repose-pied pour motos

(30) Priority: 29.10.2012 TW 101139916
(43) Date of publication of application: 30.04.2014
(73) Proprietor: Kwang Yang Motor Co., Ltd., Kaohsiung City 80794 (TW)
(72) Inventor: Wu, Ren-Jay, Cambridge CB1 1AH (GB); Lin, Chien-Cheng, Cambridge CB1 1AH (GB); Chao, Shih-Chieh, Cambridge CB1 1AH (GB)
(74) Representative: Horak, Michael

(56) References cited:
- EP-A1- 1 886 908
- CN-A- 102 452 427
- JP-A- H05 208 691

## Description

### (a) Technical Field of the Invention

The present invention generally relates to a footrest release device for motorcycles, and more particularly to a footrest release device for motorcycles that facilitates the convenience of releasing a footrest.

### (b) Description of the Prior Art

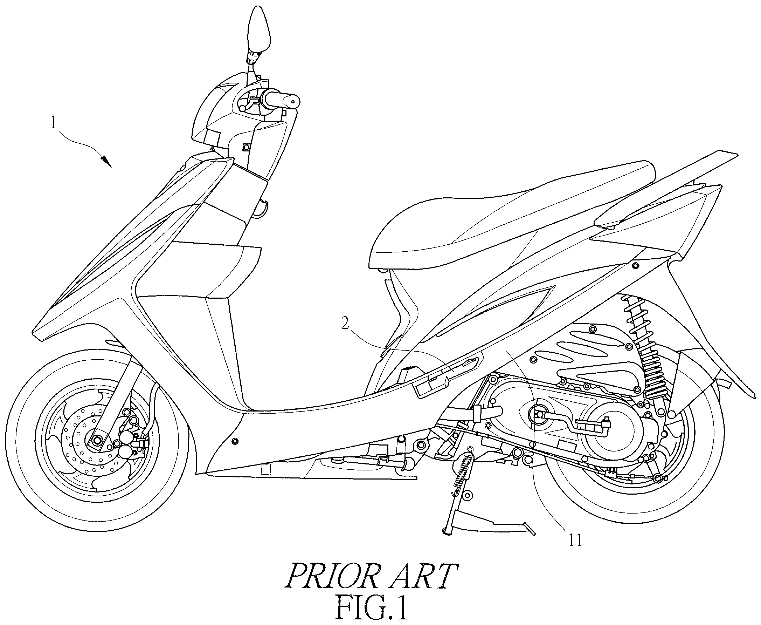

To allow a passenger sitting at the back side of a motorcycle 1 to comfortably place the feet, the motorcycle 1 is provided with two corresponding footrests 2 on two sides of a lower portion thereof. As shown in FIG 1, the footrests 2 can be folded and positioned against side covers 11 of the body of the motorcycle 1 to avoid occupation of additional space when the motorcycle 1 is parked and to avoid collision caused by the footrests 2 that project out in manually moving the motorcycle. Further, to enable the footrests 2 to automatically eject from the side covers 11 of the body of the motorcycle 1, automatic ejection footrests 2 are available in the market.

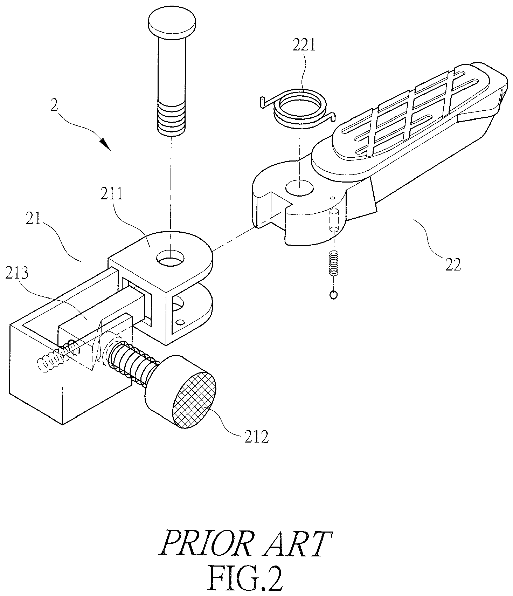

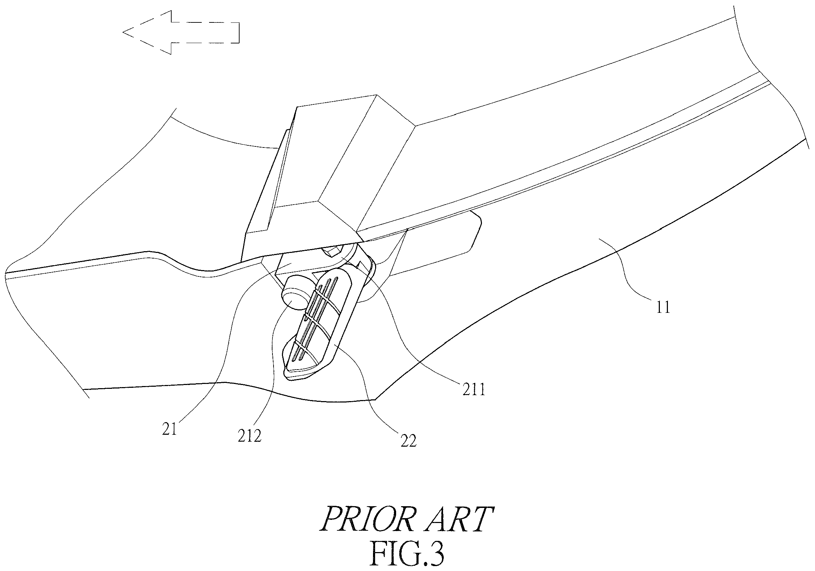

As shown in FIGS. 2 and 3, the automatic ejection footrest 2 comprises a positioning seat 21 and a footrest 22.

The positioning seat 21 has an end mounted to a side frame (not shown) of the motorcycle 1. The positioning seat 21 has a pivotal joint section 211 to which the footrest 22 is pivotally connected. The positioning seat 21 has a side surface to which a push button 212 is mounted. The push button 2121 is arranged to move a slide block 213, so that the slide block 213 imposes a constraint to the footrest 22. As such, pressing down the button causes the slide block 213 to slide. When the slide block 213 does not impose a constraint to the footrest 22, the footrest 22 is acted upon by the spring force of a return spring 221 to release (eject) from the side cover (11) of the body of the motorcycle (1) to receive a foot of a passenger to place thereon, as shown in FIG 3 (in which the arrow indicates the direction of the front end of the motorcycle).

In the above-described automatic ejection footrest 2, the arrangement described above indeed achieves the purposes of automatic ejection. However, the footrests 2 are arranged at two sides of the rear lower portion of the motorcycle 2, and a user must make individual pressing for each of the footrests 2 on the two sides in order to release the associated footrest. Thus, it is a challenge of the motorcycle industry to provide a footrest release device that enables a user to easily operate the footrests.

Also, JP H05 208691 A discloses a footrest release device for a motorcycle that comprises a saddle and a frame unit. The motor is covered by a body cover. The footrest release device is mounted to the frame unit and comprises a hand pull bar unit that comprises a base, a transmission member, and a hand pull bar. The transmission member is arranged in the bas. The hand pull bar is fixed to the transmission member. The hand pull bar unit is coupled to a mounting bracket of the frame unit via the base and the pull bar is exposed outside the body cover. A footrest unit comprises a footrest and a constraint assembly. The constrain assembly comprises a coupling member and a constrain member. The constrain member imposes a constrain to the footrest that is mounted to the frame unit by a mount seat. A control wire unit has an end coupled to the transmission member of the hand pull bar unit and an opposite end coupled to the constrain member of the footrest unit.

However, JP H05 208691 A does not discloses the mounting bracket is mounted to a cross tube of the frame unit and the base comprises a shaft hole transversely extending therethrough for receiving a shaft extending therethrough and also extending through a bore defined in a transversely extending pivot joint section of the transmission member so that the transmission member is pivotally coupled to the base by the shaft ,whereby the hand pull bar is located on the body cover at a lower portion of a front end of the saddle and is exposed outside the body cover.

### SUMMARY OF THE INVENTION

The primary object of the present invention is to overcome the drawback of the conventional motorcycle footrest that has poor operability for releasing footrests and to improve the convenience of use of the footrests.

The technical solution adopted in the present invention provides a footrest release device for a motorcycle. According to claim 1, the motorcycle comprises a saddle and a frame unit and the motorcycle is covered by a body cover, wherein the footrest release device is mounted to the frame unit. The footrest release device comprises: a hand pull bar unit, which comprises a base, a transmission member, and a hand pull bar, the transmission member being arranged in the base, the hand pull bar being fixed to the transmission member, the hand pull bar unit being coupled to a mounting bracket of the frame unit via the base; a footrest unit, which comprises a footrest and a constraint assembly, the constraint assembly comprising a coupling member and a constraint member, wherein the constraint member imposes a constraint to the footrest, the footrest unit being mounted to the frame unit by a mount seat; and a control wire unit, which has an end coupled to the transmission member of the hand pull bar unit and an opposite end coupled to the constraint member of the footrest unit, wherein the mounting bracket is mounted to a cross tube of the frame unit, the base comprising a shaft hole transversely extending therethrough, the shaft hole receiving a shaft extending therethrough, the transmission member comprising a transversely extending pivot joint section facing an assembling direction of the base, the pivot joint section comprising a bore extending therethrough, the transmission member being pivotally coupled to the base by the shaft set through the shaft hole of the base and the bore of the transmission member, a return spring (522) being fit to one side of the pivot joint section (521), the return spring (522) having one end supported on the base (51) and an opposite end supported on the transmission member (52), whereby the hand pull bar is located on the body cover at a lower portion of a front end of the saddle and is exposed outside the body cover.

The efficacy that the present invention can achieve with the above-described technical solution is that pulling the hand pull bar of the hand pull bar unit operates the footrest of the footrest unit to eject out to receive the feet of a passenger to be placed thereon thereby improving the utilization performance of the footrest release device.

Another technical feature of the present invention is that the constraint member has a lower end extending out of the guide rail of the coupling member and projecting outside a notch of a closure cover.

The efficacy achieved with the above-described technical feature is that when the hand pull bar unit or the control wire unit malfunctions and is thus incapable of operating the constraint assembly of the footrest unit, making it not possible for the footrest to eject out, a user may put a hand under the footrest unit to push the portion of the constraint member that projects outside the notch of the closure cover in order to have the constraint block moved out of a constraint slot of the footrest and thus allowing the footrest to be ejected out by the spring force of a return spring, thereby ensuring the footrest can be ejected out for use.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a side elevational view showing a conventional motorcycle.
FIG 2 is an exploded view showing a conventional rear footrest;
FIG 3 is a schematic view illustrating an operation of the conventional rear footrest.
FIG 4 is a schematic view showing an arrangement of an automatic footrest ejection device according to the present invention.
FIG 5 is a schematic view illustrating the assembling of the automatic footrest ejection device according to the present invention.
FIG 6 is an exploded view showing a hand pull bar unit.
FIG 7 is an exploded view showing a footrest unit.
FIG 8 is a schematic view illustrating assembling of a footrest release device according to the present invention.
FIG 9 is a schematic view illustrating the hand pull bar unit being pulled open.
FIGS. 10 and 11 are schematic views illustrating releasing of a footrest of the footrest unit.
FIG 12 is a schematic view illustrating the hand pull bar unit restoring the original condition.
FIGS. 13 and 14 are schematic views illustrating the footrest of the footrest unit restoring a collapsed condition.

### DETAILED DESCRIPTION OF THE PREFERRED EMBODIMENTS

The following descriptions are exemplary embodiments only, and are not intended to limit the scope, applicability or configuration of the invention in any way Rather, the following description provides a convenient illustration for implementing exemplary embodiments of the invention. Various changes to the described embodiments may be made in the function and arrangement of the elements described without departing from the scope of the invention as set forth in the appended claims.

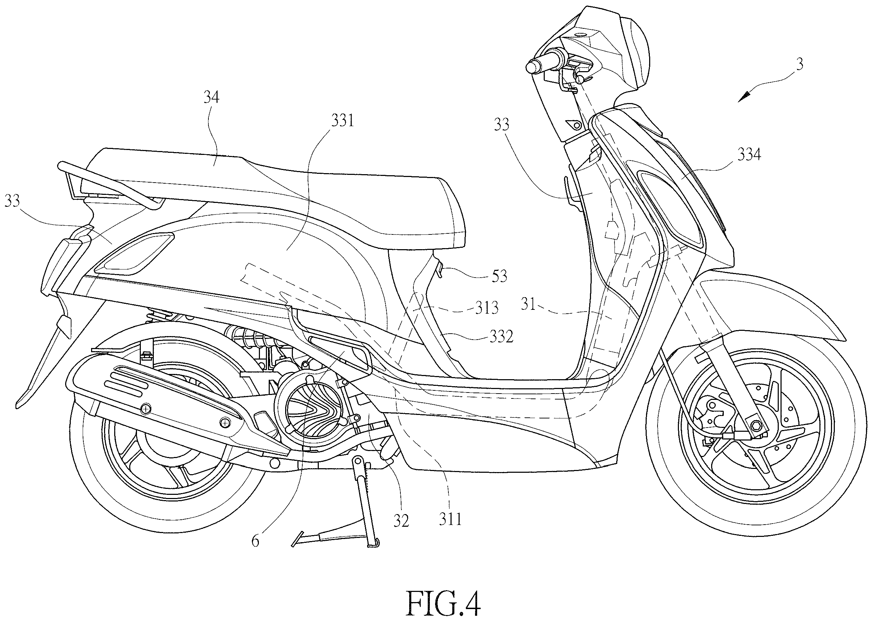

Referring first to FIG 4 (in which the arrow indicates the direction of the front end of the motorcycle), a motorcycle 3 comprises a frame unit 31. The frame unit 31 comprises side frames 311 that are set on two sides thereof and extend towards the tail of the motorcycle to carry engine suspension sections 312 of a power unit 32 mounted thereto. The side frames 311 comprise an arch-like cross tube 313 mounted in front of the engine suspension sections 312. The cross tube 313 has two end respectively mounted to the two side frames 311. The cross tube 313 may receive a front end of an article storage box (not shown) to be coupled thereto. Further, the motorcycle 3 comprises a body cover 33 arranged to cover outside thereof. The body cover 33 comprises at least side cover members 331, a central cover board 332, a knee shield hood 333, and a front decoration board 334. The side cover members 331 are set to cover lower portions of two sides of a saddle 34. The central cover board 332 is set to cover a lower portion of a front end of the saddle 34. The knee cover hood 33 and the front decoration board 334 are set to cover the front end portion of the motorcycle 3.

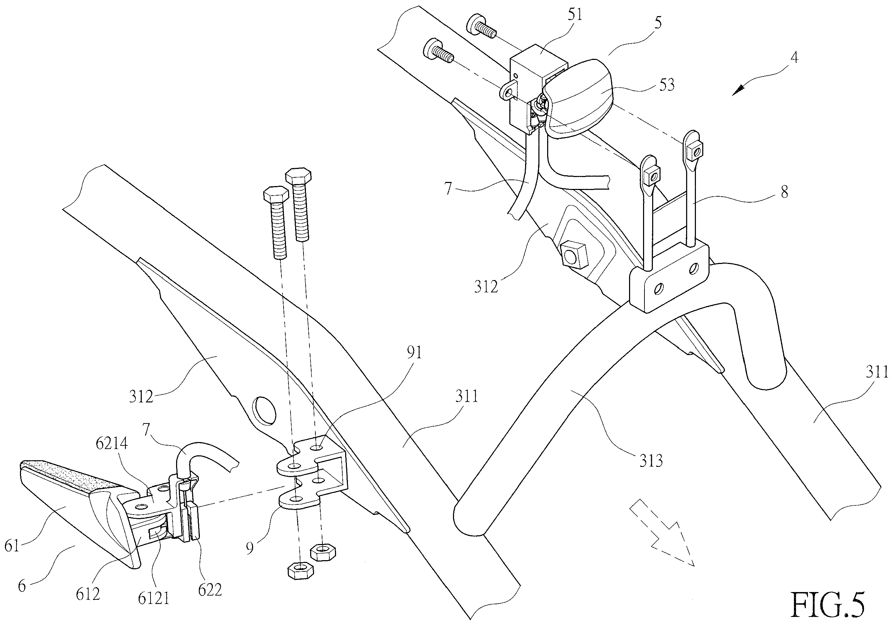

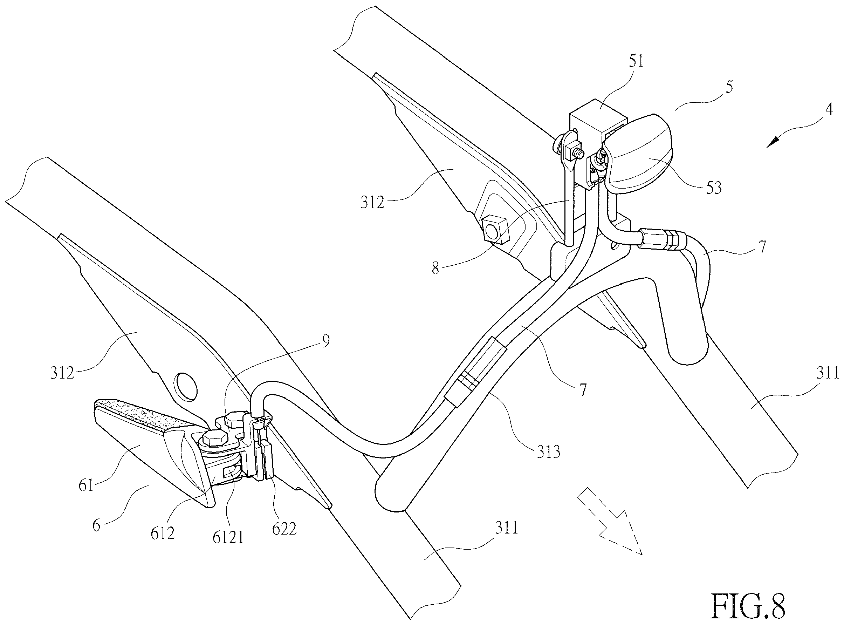

Further referring to FIGS. 5, 6, 7, and 8, a footrest release device 4 according to the present invention is mounted on the frame unit 31. The footrest release device 4 comprises a hand pull bar unit 5, a footrest unit 6, and a control wire unit 7.

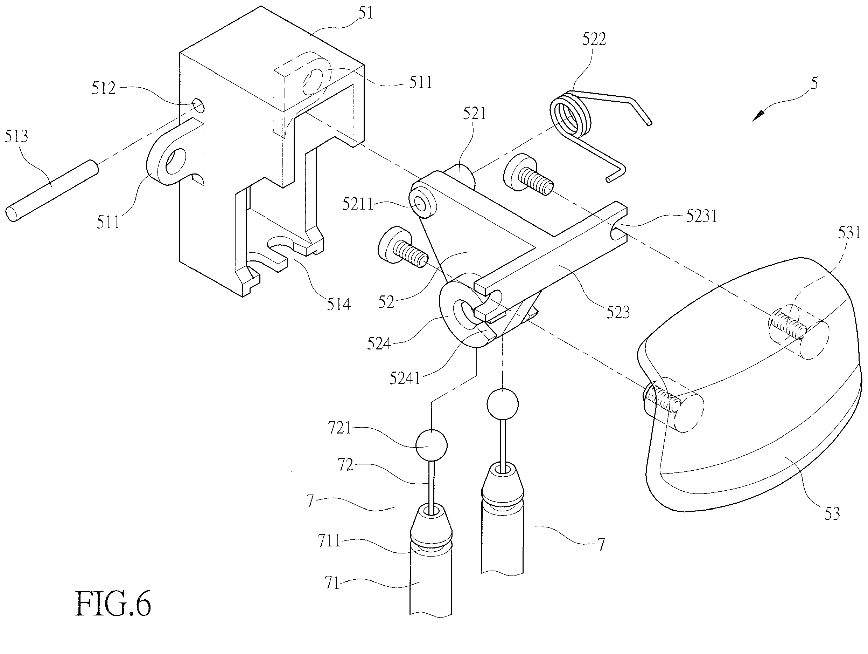

As shown in FIGS. 5 and 6, the hand pull bar unit 5 comprises a base 51, a transmission member 52, and a hand pull bar 53. The base 51 comprises two fixing lugs 511 respectively projecting from two sides of an upper portion thereof. The base 51 comprises a shaft hole 512 transversely extending therethrough at a location above the fixing lugs 511. The shaft hole 512 receives a shaft 513 extending therethrough. The base 51 has a lower portion forming a connection section 514 that faces to one side to receive the control wire unit 7 to fix thereto. The connection section 514 is composed of two curved notches.

The transmission member 52 comprises a transversely extending pivot joint section 521 facing an assembling direction of the base 51 (namely left-upward direction of FIG 6). The pivot joint section 521 comprises a bore 5211 extending therethrough. As such, the transmission member 52 is arranged to have the pivot joint section 521 extending into the base 51 and the shaft 513 is set through the shaft hole 512 of the base 51 and the bore 5211 of the transmission member 52 to pivotally couple the transmission member 52 to the base 51. A return spring 522 is fit to one side of the pivot joint section 521. The return spring 522 has one end supported on the base 51 and an opposite end supported on the transmission member 52. The transmission member 52 comprises, at the side (the right hand side of FIG 6) opposite to the pivot joint section 521, a transversely extending mounting section 523. The mounting section 523 has two ends that are recessed to each form a through slot 5231. The transmission member 52 comprises a coupling section 524 arranged below and behind the mounting section 523 (the lower side of FIG 6) to receive the control wire unit 7 to connect thereto. The coupling section 524 comprises curved open slots 5241.

The hand pull bar 53 comprises a pair of locking holes 531 facing the mounting section 523 of the transmission member 52. As such, threaded fasteners S may be received through the through slots 5231 of the transmission member 52 and the locking holes 531 to fix the hand pull bar 53 to the mounting section 523 of the transmission member 52. As such, when the hand pull bar 53 is pulled, the two control wire units 7 connected to the transmission member 52 are caused to operate.

Referring to FIGS. 5, 6, and 8, the hand pull bar unit 5 is secured by having threaded fasteners S extending through the fixing lugs 511 of the base 51 and screwed to a mounting bracket 8. The mounting bracket 8 has a lower end welded to the cross tube 312 of the frame unit 31 so as to securely fix the hand pull bar unit 5 to the frame unit 31. After the hand pull bar unit 5 is fixed to the frame unit 3, the hand pull bar 53 of the hand pull bar unit 5 is located on the central cover board 332 of the body cover 33 that is located on the lower portion of the front end of the saddle 34 and is exposed outside the central cover board 332 of the body cover 33 to allow a user to easily operate the hand pull bar 53.

Referring to FIGS. 4, 5, 7, and 8, a footrest unit 6 is mounted at each side of the body of the motorcycle 3. The footrest unit 6 comprises a footrest 61 and a constraint assembly 62.

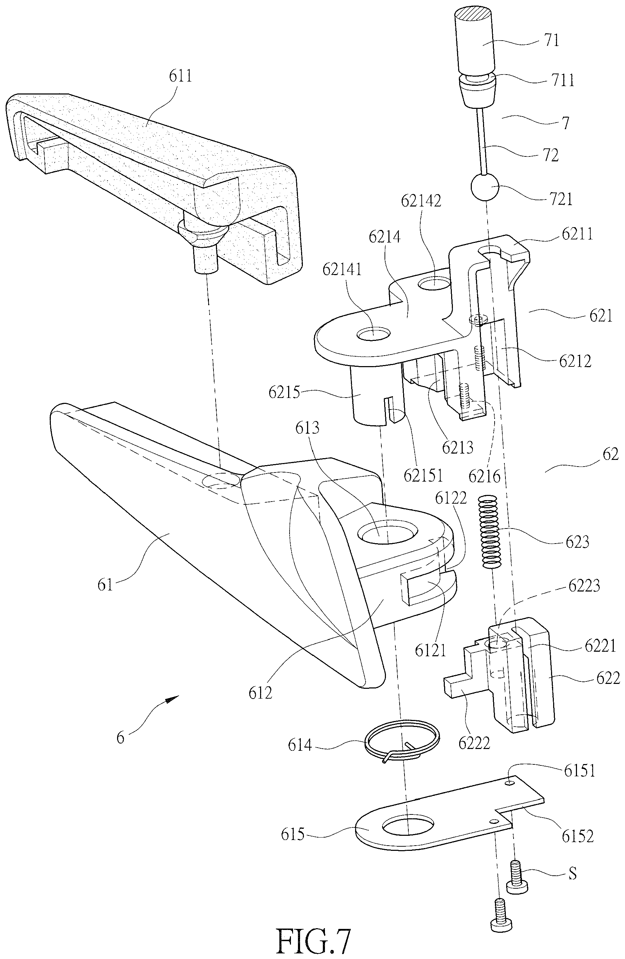

As shown in FIGS. 5 and 7, the footrests 61 are mounted at the two sides of the body of the motorcycle 3 in a symmetric manner. The following description is given to one of two footrests 61 as an example for illustration. The footrest 61 has an outer circumference to which an anti-skidding member 611 is attached. The anti-skidding member 611 is made of a rubber material. The footrest 61 has an end that forms a rotation section 612. The rotation section 612 comprises a rotation hole 613 formed therein. The rotation hole 613 receives a return spring 614 mounted therein. The rotation section 612 has a bottom to which a closure cover 615 is mounted. The closure cover 615 comprises two through holes 6151, and a notch 6152 formed therein. The rotation section 612 has an outer circumference that is recessed to form a guide slot 6121. The guide slot 6121 has an end having a lower wall in which a notch-like constraint slot 6122 is formed to extend downward.

The constraint assembly 62 comprises a coupling member 621 and a constraint member 622. The coupling member 621 has a top forming a connection section 6211 for connecting with the control wire unit 7. The connection section 6211 is structured to form an open slot. Arranged under the connection section 6211 is a longitudinal guide rail 6212 that extends downward. Formed in one side of the guide rail 6212 is a receiving compartment 6213 having an opening facing downwards and in communication therewith. Formed at one side of the connection section 6211 is a fixing section 6214, which comprises a first fixing hole 62141 and a second fixing hole 62142 formed therein. The fixing section 6214 comprises a rotation axle 6215 that is located below the first fixing hole 62141 and extends downward. The rotation axle 6215 comprises a fitting slit 62151 formed therein. The rotation axle 6215 is receivable in a rotation hole 613 of the footrest 61, whereby the rotation axle 6215 serves as a rotation center of the footrest 61. Further, the return spring 614 of the footrest 61 has one end retained in the rotation hole 613 and an opposite end of the return spring 614 is fit to and retained in the fitting slit 62151 of the rotation axle 6215. Two mounting holes 6216 are provided at one side of the guide rail 6212.

The constraint member 622 is received in the guide rail 6212 of the coupling member 621 in such a way that a lower end of the constraint member 622 extends outside the guide rail 6212 of the coupling member 621 and also projects outside the notch 6152 of the closure cover 615. The constraint member 622 is provided with a longitudinal fitting slot 6221. A constraint block 6222 projects from one side of the fitting slot 6221 in such a way that the constraint block 6222 extends outside the guide rail 6212 of the coupling member 621. Formed besides the constraint block 6222 is a spring receiving hole 6223 having an opening facing upward. The spring receiving hole 6223 receives and retains therein a spring 623. The spring 623 has an upper end fit into the receiving compartment 6213 of the coupling member 621, whereby the elastic extension force of the spring 623 constantly biases the constraint member 622 downward.

Referring to FIGS. 5, 7, and 8, to assemble the footrest unit 6, the rotation axle 6215 of the constraint assembly 62 is inserted into the rotation hole 613 of the footrest 61. Meanwhile, the constraint block 6222 of the constraint assembly 62 is fit into the guide slot 6121 of the footrest 61 and threaded fasteners S are respectively fit through the fixing holes 6151 of the closure cover 615 and screwed to the mounting holes 6216 of the constraint assembly 62. As such, assembling of the footrest unit 6 is completed. The assembled footrest unit 6 can be further manipulated by having threaded fasteners S extending through fixing holes 91 of a mount seat 9 and the first fixing hole 62141 and the second fixing hole 62142 of the constraint assembly 62 to have the footrest unit 6 threadingly fixed to the mount seat 9. The mount seat 9 can be welded, in advance, to the side frames 311 of the frame unit 31. As such, the footrest unit 6 is securely mounted to the side frame 311 of the frame unit 3.

Further referring to FIGS. 5, 6, 7, and 8, in the instant embodiment of the present invention, there are two control wire units 7 used. Each of the control wire unit 7 is connected to an associated hand pull bar unit 5 and an associated footrest unit 6. The following description is given to just one of the control wire units 7 as an example of illustration. The control wire unit 7 comprises an outer tube 71 and an inner wire 72. The inner wire 72 is received in and extends through the outer tube 71. The outer tube 71 has ends each forming a circumferential fitting groove 711. The inner wire 72 has ends each forming a spherical block 721. As shown in FIGS. 6 and 7, the fitting groove 71 formed in one end of the outer tube 71 is fit in the connection section 514 of the hand pull bar unit 5 and the fitting groove 71 formed in the other end of the is fit to the connection section 6211 of the footrest unit 6. The block 721 formed at one end of the inner wire 72 is fit in the open slot 5241 of the hand pull bar unit 5 and the block 721 of the other end is fit in the fitting slot 6221 of the footrest unit 6, whereby the user may pull the hand pull bar 53 of the hand pull bar unit 5 to operate, via the control wire unit 7, the footrest unit 5. Further, since the hand pull bar 53 of the hand pull bar unit 5 is located above the footrest unit 5, excessive curving of the control wire unit 7 can be avoided and the length of the control wire can be effectively reduced.

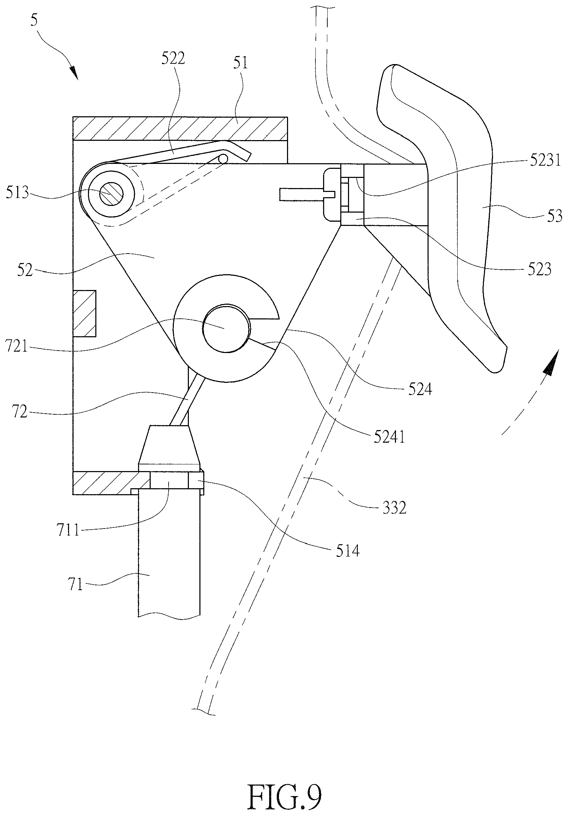

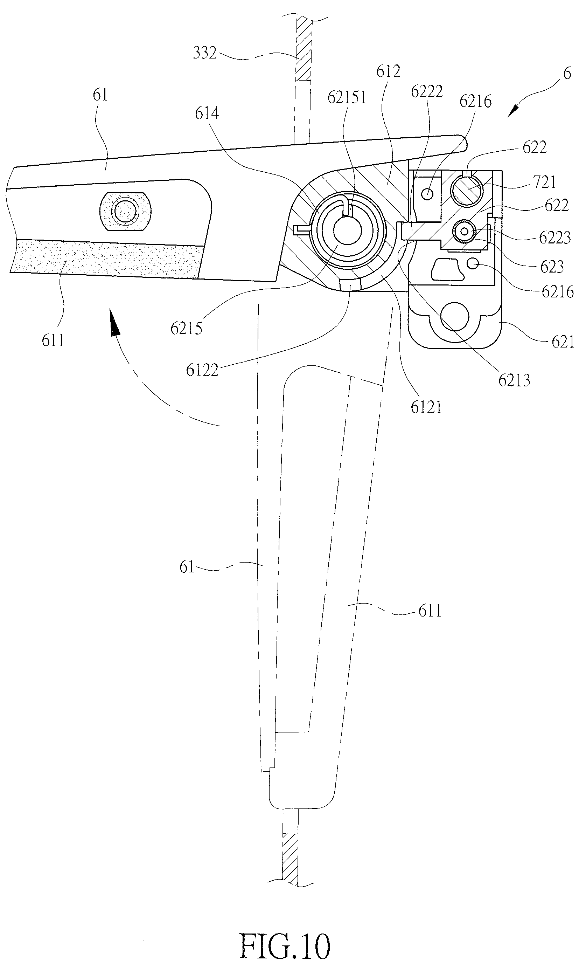

Referring to FIGS. 9, 10, and 11, to eject out the footrests 61 of the footrest units 6 from a collapsed condition to receive feet of a passenger to place thereon, the user may follow what shown in FIG 9 by using a hand to pull upward the hand pull bars 53 of the hand pull bar units 5 so that the hand pull bars 53 cause the transmission members 52 to take an upward movement by a distance and when the transmission members 52 move upward by a distance, the control wire units 7 are caused to drive the constraint members 622 of the footrest units 6 to slide upward along the guide rails 6212 of the coupling members 621. When the constraint members 622 slide upwards along the guide rails 6212 of the coupling members 621, the constraint blocks 6222 of the constraint members 622 are caused to move out of the constraint slots 6122 of the footrests 61 and moving into the guide slots 6121 of the footrests 61. When the constraint blocks 6222 of the constraint members 622 move out of the constraint slots 6122 of the footrests 61, the footrests are no longer constrained by the constraint members 622, whereby the footrests 61 are elastically ejected outside the side frames 332 by the spring forces of the return springs 614 received in the rotation holes 613 to receive the feet of the passenger to place thereon.

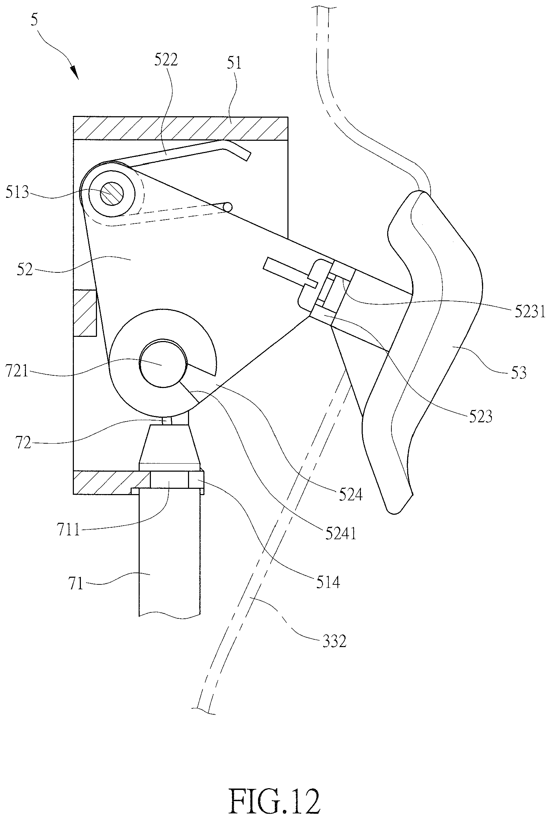

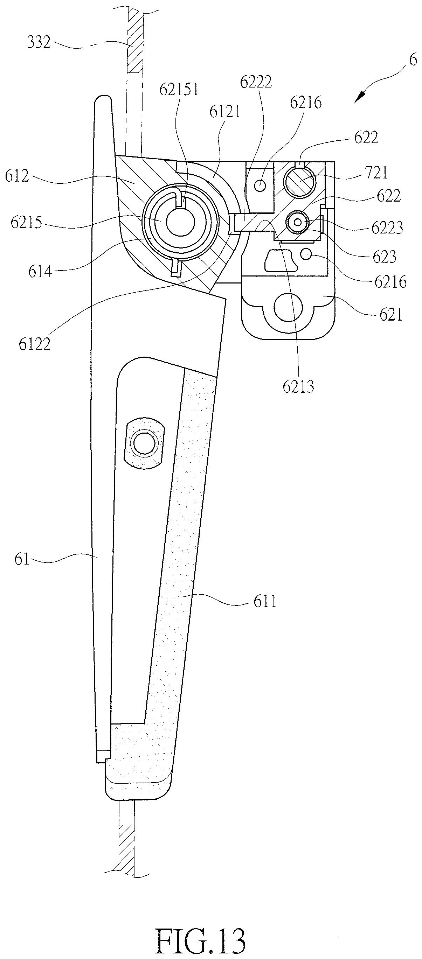

Further referring to FIGS. 12 and 13, when the footrests 61 have been ejected, the hand pull bars 5 can restore the original condition by the spring forces of the return springs 522 of the hand pull bar units 5. As shown in FIG 13, meanwhile, the constraint assemblies 62 of the footrests units 6 also return to the original condition, but the constraint blocks 622 of the constraint assemblies 62 are kept in the guide slots 6121 of the footrests 61.

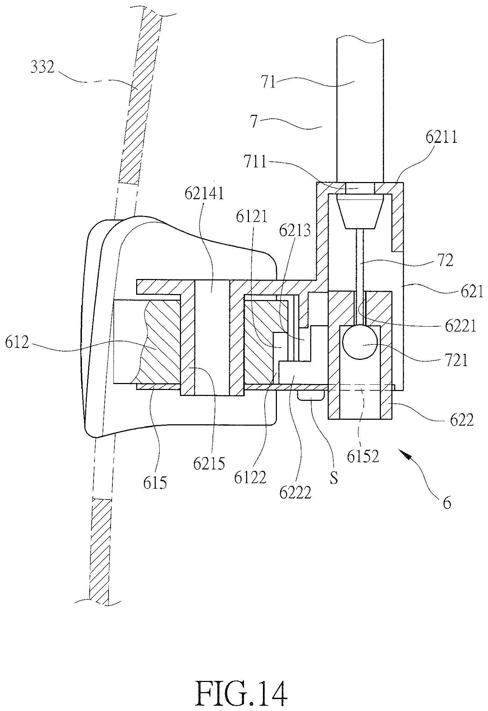

To have the footrests 61 return to the collapsed condition, as shown in FIG 14, the footrests 61 of the footrest units 6 are pushed into the side cover members 332, with the rotation axles 6215 of the constraint assemblies 62 as centers. On the one hand, the return springs 614 received in the rotation holes 613 of the footrests 61 are driven to a tightened condition and on the other hand, the constraint blocks 6222 of the constraint assemblies 62 make a corresponding movement in the guide slots 6121 of the footrests 61, whereby when the constraint blocks 6222 slide to reach the constraint slots 6122 of the footrests 61, the constraint blocks 6222 are forced by the compression spring forces of the springs 623 of the constraint assemblies 62 to slide into the constraint slots 6122 of the footrests 61 and the footrests 61 are thus constrained. As such, the footrests 61 cannot be biased by the spring forces of the return springs 614 to eject outside the side cover members 331 and are kept in the collapsed condition beside the side cover members 332.

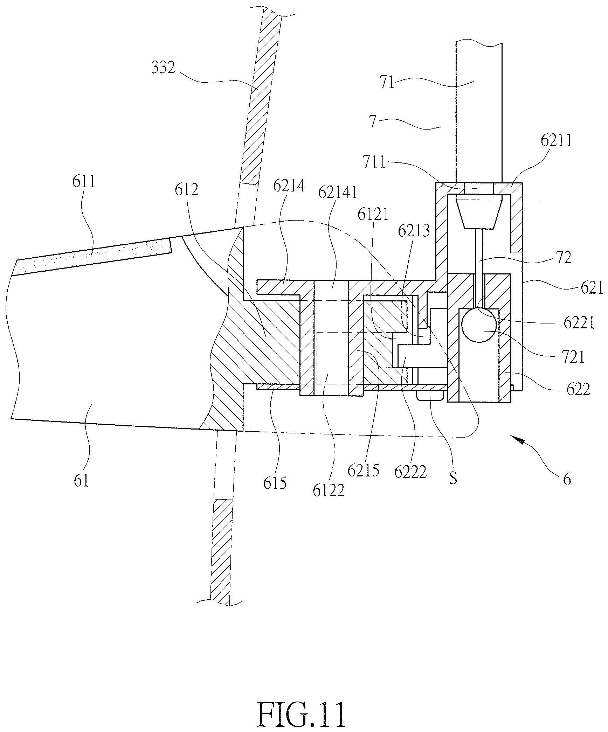

Also referring to FIGS. 11 and 13, the constraint members 622 are received in the guide rails 6212 of the coupling members 621 with the lower ends of the constraint members 622 extending outside the guide rails 6212 of the coupling members 621 and also projecting out of the notches 6152 of the closure covers 615, so that when the hand pull bar units 8 or the control wire units 7 malfunction and are incapable of operating the constraint assemblies 62 of the footrest units 6, making it not possible to eject out the footrests 61, the user may put a hand under the footrest 61 to push the portion of the constraint member 622 that projects out of the notch 6152 of the closure cover 615 so as to make the constraint block 6222 move out of the constraint slot 6122 of the footrest 61 and thus allowing the footrest 61 to be ejected out by the spring force of the return spring 614.

The efficacy of the present invention is that the hand pull bar unit 5 is threadingly fixed to a mounting bracket 8 by having threaded fasteners S received through the fixing lugs 511 of the base 51. The lower end of the mounting bracket 8 is welded to a cross tube 312 of a frame unit 31 so that the hand pull bar unit 5 is securely positioned on the frame unit 31 and the hand pull bar 53 of the hand pull bar unit 5 is located on a central cover board 332 of a body cover 33 set at a lower portion of a front end of the saddle 34 and exposed outside the central cover board 332 of the body cover 33. The hand pull bar unit 5 is coupled, via control wire units 7, to footrest units 5, so that pulling the hand pull bar 53 of the hand pull bar unit 5 can operate footrests 61 of the footrest units 6 to eject out. In other words, the hand pull bar unit 5 can drive the two control wire units 7 to simultaneously release the footrest units 6 respectively set at two sides of the vehicle body to allow the feet of a passenger to be placed thereon thereby enhancing the utilization effectiveness of the footrest release device 4. Further, with the hand pull bar 53 of the hand pull bar unit 5 is located on the central cover board 332 of the body cover 33 set at the lower side of the front end of the saddle 34 and exposed outside the central cover board 332 of the body cover 33, it is made easy for a rider to use a hand to pull the hand pull bar 53 of the hand pull bar unit 5 thereby improving the operation convenience of the footrest release device 4.

## Claims

1. A motorcycle comprising a footrest release device, the motorcycle (3) comprising a saddle (34) and a frame unit (31) and the motorcycle (3) being covered by a body cover (33), wherein the footrest release device (4) is mounted to the frame unit (31), the footrest release device (4) comprising:
a hand pull bar unit (5), which comprises a base (51), a transmission member (52), and a hand pull bar (53), the transmission member (52) being arranged in the base (51), the hand pull bar (53) being fixed to the transmission member (52), the hand pull bar unit (5) being coupled to a mounting bracket (8) of the frame unit (31) via the base (51);
a footrest unit (6), which comprises a footrest (61) and a constraint assembly (62), the constraint assembly (62) comprising a coupling member (621) and a constraint member (622), wherein the constraint member (622) imposes a constraint to the footrest (61), the footrest unit (6) being mounted to the frame unit (31) by a mount seat (9); and
a control wire unit (7), which has an end coupled to the transmission member (52) of the hand pull bar unit (5) and an opposite end coupled to the constraint member (622) of the footrest unit (6);
**characterized in that** the mounting bracket (8) is mounted to a cross tube (313) of the frame unit (31), the base (51) comprising two fixing lugs (511) respectively mounted on two sides thereof, and a shaft hole (512) transversely extending therethrough at a location above the fixing lugs (511), the shaft hole (512) receiving a shaft (513) extending therethrough, the transmission member (52) comprising a transversely extending pivot joint section (521) facing an assembling direction of the base (51), the pivot joint section (521) comprising a bore (5211) extending therethrough, the transmission member (52) being pivotally coupled to the base (51) by the shaft (513) set through the shaft hole (512) of the base (51) and the bore (5211) of the transmission member (52), a return spring (522) being fit to one side of the pivot joint section (521), the return spring (522) having one end supported on the base (51) and an opposite end supported on the transmission member (52), whereby the hand pull bar (53) is located on the body cover (33) at a lower portion of a front end of the saddle (34) and is exposed outside the body cover (33).

2. The motorcycle according to claim 1, wherein the hand pull bar (53) of the hand pull bar unit (5) is exposed outside a central cover board (332) of the body cover (33).

3. The motorcycle according to claim 1, wherein the base (51) has a lower portion forming a connection section (514) for receiving the control wire unit (7) to fix thereto, the connection section (514) comprising two curved notches.

4. The motorcycle according to claim 1, wherein the transmission member (52) comprises, at the side opposite to the pivot joint section (521), a transversely extending mounting section (523), the mounting section (523) having two ends that are recessed to each form a through slot (5231), a coupling section (524) being arranged below the mounting section (523) to receive the control wire unit (7) to connect thereto, the coupling section (524) comprising curved open slots (5241).

5. The motorcycle according to claim 1, wherein the footrest (61) has an outer circumference to which an anti-skidding member (611) is attached, the anti-skidding member (611) being made of a rubber material.

6. The motorcycle according to claim 1 or 5, wherein the footrest (61) has an end that forms a rotation section (612), the rotation section (612) comprising a rotation hole (613) formed therein, the rotation hole (613) receiving a return spring (6144) mounted therein, the rotation section (612) having a bottom to which a closure cover (615) is mounted, the closure cover (615) comprising two through holes (6151) and a notch (6152) formed therein, the rotation section (612) having an outer circumference that is recessed to form a guide slot (6121), the guide slot (6121) having an end having a lower wall in which a notch-like constraint slot (6122) is formed to extend downward.

7. The motorcycle according to claim 1, wherein the coupling member (621) has a top forming a connection section (6211) for connecting with the control wire unit (7), the connection section (6211) being structured to form an open slot, a guide rail (6212) arranged under the connection section (6211) and extending downward, a receiving compartment (6213) being formed in one side of the guide rail (6212) and having an opening facing downwards, a fixing section (6214) being formed at one side of the connection section (6211) and comprising a first fixing hole (62141) and a second fixing hole (62142) formed therein, the fixing section (6214) comprising a rotation axle (6215) that is located below the first fixing hole (62141) and extends downward, the rotation axle (6215) comprising a fitting slit (62151) formed therein.

8. The motorcycle according to claim 7, wherein the constraint member (622) is received in the guide rail (6212) of the coupling member (621), the constraint member (622) being provided with a longitudinal fitting slot (6221), a constraint block (6222) projecting from one side of the fitting slot (6221) in such a way that the constraint block (6222) extends outside the guide rail (6212), a spring receiving hole (6223) being formed besides the constraint block (6222) and having an opening facing upward, the spring receiving hole (6223) receiving therein a spring (623), the spring (623) having an upper end fit into the receiving compartment (6213) of the coupling member (621).

9. The motorcycle according to claim 8, wherein the constraint member (622) has a lower end that extends outside the guide rail (6212) of the coupling member (621) and also projects outside the notch (6152) of the closure cover (615).

## Patentansprüche

1. Motorrad mit einer Fußstützenfreigabevorrichtung, wobei das Motorrad (3) einen Sattel (34) und eine Rahmeneinheit (31) umfasst und von einem Gehäusedeckel (33) bedeckt ist, wobei die Fußstützenfreigabevorrichtung (4) an die Rahmeneinheit (31) montiert ist und folgendes umfasst:
eine Handzugstangeneinheit (5) mit einer Basis (51), einem Übertragungsglied (52) und einer Handzugstange (53), wobei das Übertragungsglied (52) in der Basis (51) angeordnet ist und die Handzugstange (53) an dem Übertragungsglied (52) befestigt ist, die Handzugstangeneinheit (5) ist mittels der Basis (51) an einen Montagebügel (8) der Rahmeneinheit (31) gekoppelt;
eine Fußstützeinheit (6) mit einer Fußstütze (61) und einem Beschränkungsmechanismus (62), der ein Kupplungsglied (621) und ein Beschränkungsglied (622) umfasst, wobei das Beschränkungsglied (622) der Fußstütze (61) eine Beschränkung auferlegt, die Fußstützeinheit (6) ist mittels eines Halterungssitzes (9) an die Rahmeneinheit (31) montiert; und
eine Steuerleitungseinheit (7), deren eines Ende mit dem Übertragungsglied (52) (52) der Handzugstangeneinheit (5) verbunden ist und ein gegenüberliegendes Ende mit dem Beschränkungsglied (622) der Fußstützeinheit (6);
**dadurch gekennzeichnet, dass** der Montagebügel (8) an ein Querrohr (313) der Rahmeneinheit (31) montiert ist, wobei die Basis (51) zwei Befestigungslaschen (511) umfasst, die an zwei Seiten davon montiert sind, und ein Wellenloch (512), das quer hindurch verläuft, in einer Position oberhalb der Befestigungslaschen (511), wobei das Wellenloch (512) eine Welle (513) aufnimmt, die hindurch verläuft, wobei das Getriebeglied (52) einen quer verlaufenden Drehgelenksabschnitt (521) umfasst, der einer Montagerichtung der Basis (51) gegenüberliegt,
wobei der Drehgelenkabschnitt (521) eine Bohrung (5211) umfasst, die dadurch verläuft, wobei das Getriebeglied (52) durch die Welle (513) schwenkbar an die Basis (51) gekoppelt ist, wobei die Welle durch das Wellenloch (512) der Basis (51) und die Bohrung (5211) des Getriebeglieds (52) gesetzt ist, wobei eine Rückstellfeder (522) an eine Seite des Drehgelenkabschnitts (521) gepasst ist, wobei die Rückstellfeder(522) mit einem Ende auf die Basis (51) gestützt ist und ein gegenüberliegendes Ende ist auf das Getriebeglied (52) gestützt, wodurch die Handzugstange (53) auf dem Gehäusedeckel (33) in einem unteren Teil eines Vorderseitenendes des Sattels (34) positioniert ist und außerhalb des Gehäusedeckels (33) ausgesetzt ist.

2. Motorrad nach Anspruch 1, wobei die Handzugstange (53) der Handzugstangeneinheit (5) außerhalb einer zentralen Deckplatte (332) des Gehäusedeckels (33) ausgesetzt ist.

3. Motorrad nach Anspruch 1, wobei die Basis (51) ein unteres Teil hat, das einen Verbindungsabschnitt (514) zur Aufnahme der Steuerleitungseinheit (7) bildet, um daran den Verbindungsabschnitt (514) mit zwei gebogenen Kerben zu befestigen.

4. Motorrad nach Anspruch 1, wobei das Getriebeglied (52) an der Seite gegenüber dem Drehgelenkabschnitt (521) einen quer verlaufenden Montageabschnitt (523) umfasst, der zwei Enden aufweist, die vertieft sind, um je einen durchgehenden Schlitz (5231) zu bilden, wobei ein Kupplungsabschnitt (524) unterhalb des Montageabschnitts (523) angeordnet ist, um die Steuerleitungseinheit (7) aufzunehmen, um damit den Kupplungsabschnitt (524) mit gebogenen offenen Schlitzen (5241) zu verbinden.

5. Motorrad nach Anspruch 1, wobei die Fußstütze (61) einen Außenumfang umfasst, an dem ein rutschfestes Glied (611) angebracht ist, das aus einem Gummimaterial ist.

6. Motorrad nach Anspruch 1 oder 5, wobei die Fußstütze (61) ein Ende hat, das einen Rotationsabschnitt (612) bildet, in dem ein Rotationsloch (613) gebildet ist, wobei das Rotationsloch (613) eine Rückstellfeder (6144) aufnimmt, die darin montiert ist, der Rotationsabschnitt (612) weist einen Boden auf, an den ein Verschlussdeckel (615) montiert ist, der zwei Durchgangslöcher (6151) und eine Kerbe (6152) darin umfasst, wobei der Rotationsabschnitt (612) einen vertieften Außenumfang hat, um einen Führungsschlitz (6121) zu bilden, der ein Ende mit einer unteren Wand umfasst, in der ein kerbenähnlicher Beschränkungsschlitz (6122) gebildet ist. um nach unten zu verlaufen.

7. Motorrad nach Anspruch 1, wobei das Kupplungsglied (621) ein Oberteil hat, das einen Verbindungsabschnitt (6211) zum Verbinden mit der Steuerleitungseinheit (7) bildet, wobei der Verbindungsabschnitt (6211) strukturiert ist, um einen offenen Schlitz zu bilden, wobei eine Führungsschiene (6212) unter dem Verbindungsabschnitt (6211) angeordnet ist und nach unten verläuft, wobei eine Aufnahmekammer (6213) in einer Seite der Führungsschiene (6212) gebildet ist, mit einer Öffnung nach unten hin, wobei ein Befestigungsabschnitt (6214) an einer Seite des Verbindungsabschnitts (6211) gebildet ist, mit einem ersten Befestigungsloch (62141) und einem zweiten Befestigungsloch (62142) darin, wobei der Befestigungsabschnitt (6214) eine Rotationsachse (6215) umfasst, die unterhalb des ersten Befestigungslochs (62141) positioniert ist und sich nach unten erstreckt, wobei die Rotationsachse (6215) einen Passschlitz (62151) hat.

8. Motorrad nach Anspruch 7 wobei das Beschränkungsglied (622) in der Führungsschiene (6212) des Kupplungsgliedes (621) aufgenommen wird, wobei das Beschränkungsglied (622) mit einem Längspassschlitz (6221) versehen ist, wobei ein Beschränkungsblock (6222) von einer Seite des Passschlitzes (6221) derart vorsteht, dass der Beschränkungsblock (6222) sich außerhalb der Führungsschiene (6212) erstreckt, wobei ein Federaufnahmeloch (6223) neben dem Beschränkungsblock (6222) gebildet ist, mit einer Öffnung nach oben, wobei das Federaufnahmeloch (6223) eine Feder (623) aufnimmt, die ein oberes Ende hat, das in die Aufnahmekammer (6213) des Kupplungsgliedes (621) passt.

9. Motorrad nach Anspruch 8, wobei das Beschränkungsglied (622) ein unteres Ende hat, das sich außerhalb der Führungsschiene (6212) des Kupplungsgliedes (621) erstreckt und auch aus der Kerbe (6152) des Verschlussdeckels (615) vorsteht.

## Revendications

1. Motocyclette comprenant un dispositif de libération de repose-pied, la motocyclette (3) comprenant une selle (34) et une unité de cadre (31) et la motocyclette (3) étant couverte par une carrosserie (33), où le dispositif de libération de repose-pied (4) est monté sur l'unité de cadre (31), le dispositif de libération de repose-pied (4) comprenant:
une unité de barre de traction manuelle (5), qui comprend une base (51), un membre de transmission (52), et une barre de traction manuelle (53), le membre de transmission (52) étant disposé dans la base (51), la barre de traction manuelle (53) étant fixée au membre de transmission (52), l'unité de barre de traction manuelle (5) étant couplée à un support de fixation (8) de l'unité de cadre (31) par la base (51);
une unité de repose-pied (6), qui comprend un repose-pied (61) et un mécanisme de contrainte (62), le mécanisme de contrainte (62) comprenant un membre de couplage (621) et un membre de contrainte (622), où le membre de contrainte (622) impose une contrainte au repose-pied (61), l'unité de repose-pied (6) étant montée sur l'unité de cadre (31) par un support de montage (9); et
une unité de fil de contrôle (7), qui a une extrémité couplée au membre de transmission (52) de l'unité de barre de traction manuelle (5) et une extrémité opposée couplée au membre de contrainte (622) de l'unité de repose-pied (6);
**caractérisée en ce que** le support de fixation (8) est monté sur un tube transversal (313) de l'unité de cadre (31), la base (51) comprenant deux oreilles de fixation (511) respectivement montées sur les deux côtés de celle-ci et un trou d'arbre (512) s'étendant transversalement à travers celle-ci à une position au-dessus des oreilles de fixation (511), le trou d'arbre (512) recevant un arbre (513) s'étendant à travers celui-ci, le membre de transmission (52) comprenant une section de joint de pivot (521) s'étendant transversalement et étant opposée à une direction d'assemblage de la base (51), la section de joint de pivot (521) comprenant un trou (5211) s'étendant à travers celle-ci, le membre de transmission (52) étant couplé de manière pivotante à la base (51) par l'arbre (513) placé à travers le trou d'arbre (512) de la base (51) et le trou (5211) du membre de transmission (52), un ressort de rappel (522) étant monté sur un côté de la section de joint de pivot (521), le ressort de rappel (522) ayant une extrémité supportée sur la base (51) et une extrémité opposée supportée sur le membre de transmission (52), de telle sorte que la barre de traction manuelle (53) est située sur la carrosserie du corps (33) à une partie inférieure d'une extrémité antérieure de la selle (34) et est exposée à l'extérieur de la carrosserie du corps (33).

2. Motocyclette selon la revendication 1, où la barre de traction manuelle (53) de l'unité de barre de traction manuelle (5) est exposé à l'extérieur d'un panneau de recouvrement central (332) de la carrosserie du corps (33).

3. Motocyclette selon la revendication 1, où la base (51) a une partie inférieure qui forme une section de connexion (514) pour recevoir l'unité de fil de contrôle (7) destinée à y être fixée, la section de connexion (514) comprenant deux encoches incurvées.

4. Motocyclette selon la revendication 1, où le membre de transmission (52) comprend, sur le côté opposé à la section de joint de pivot (521), une section de montage s'étendant transversalement (523), la section de montage (523) ayant deux extrémités qui sont creusées de manière à former chacune une fente traversante (5231), une section de couplage (524) étant disposée au-dessous de la section de montage (523) pour recevoir l'unité de fil de contrôle (7) destinée a y être connectée, la section de couplage (524) comprenant des fentes ouvertes incurvées (5241).

5. Motocyclette selon la revendication 1, où le repose-pied (61) a une circonférence extérieure sur laquelle est attaché un membre anti-dérapage (611), le membre anti-dérapage (611) étant constitué d'un matériau en caoutchouc.

6. Motocyclette selon la revendication 1 ou 5, où le repose-pied (61) a une extrémité qui forme une section de rotation (612), la section de rotation (612) comprenant un trou de rotation (613) formé à l'intérieur, le trou de rotation (613) recevant un ressort de rappel (6144) monté à l'intérieur, la section de rotation (612) ayant un fond sur lequel un couvercle de fermeture (615) est monté, le couvercle de fermeture (615) comprenant deux trous traversants (6151) et une encoche (6152) formé à l'intérieur, la section de rotation (612) ayant une circonférence extérieure qui est creusée pour former une fente de guide (6121), la fente de guide (6121) ayant une extrémité avec une paroi inférieure sur laquelle une fente de contrainte du type encoche (6122) est formée pour s'étendre vers le bas.

7. Motocyclette selon la revendication 1, où le membre de couplage (621) a une partie supérieure qui forme une section de connexion (6211) pour se connecter avec l'unité de fil de contrôle (7), la section de connexion (6211) étant structurée pour former une fente ouverte, un rail de guidage (6212) disposé sous la section de connexion (6211) et s'étendant vers le bas, un compartiment de réception (6213) étant formé dans un côté du rail de guidage (6212) et ayant une ouverture orientée vers le bas, une section de fixation (6214) étant formée d'un côté de la section de connexion (6211) et comprenant un premier trou de fixation (62141) et un deuxième trou de fixation (62142) formés à l'intérieur, la section de fixation (6214) comprenant un essieu de rotation (6215) qui est situé au-dessous du premier trou de fixation (62141) et qui s'étend vers le bas, l'essieu de rotation (6215) comprenant une fente d'adaptation (62151) formée a l'intérieur.

8. Motocyclette selon la revendication 7, où le membre de contrainte (622) est reçu dans le rail de guidage (6212) du membre de couplage (621), le membre de contrainte (622) étant pourvu d'une fente de montage longitudinale (6221), un bloc de contrainte (6222) faisant saillie d'un côté de la fente de montage (6221) de telle sorte que le bloc de contrainte (6222) s'étend à l'extérieur du rail de guidage (6212), un trou de réception de ressort (6223) étant formé à côté du bloc de contrainte (6222) et ayant une ouverture orientée vers le haut, le trou de réception de ressort (6223) recevant à son intérieur un ressort (623), le ressort (623) ayant une extrémité supérieure ajustée dans le compartiment de réception (6213) du membre de couplage (621).

9. Motocyclette selon la revendication 8, où le membre de contrainte (622) a une extrémité inférieure qui s'étend à l'extérieur du rail de guidage (6212) du membre de couplage (621) et fait également saillie à l'extérieur de l'encoche (6152) du couvercle de fermeture (615).
